# EUROPÄISCHE PATENTSCHRIFT

(11) **EP 0 941 888 B1**
(45) Veröffentlichungstag und Bekanntmachung des Hinweises auf die Patenterteilung: **05.11.2003**
(21) Anmeldenummer: 99102363.1
(22) Anmeldetag: 06.02.1999
(51) Int. Cl.: B60N 2/08

(54) **Längsverstellvorrichtung für einen Sitz, insbesondere Kraftfahrzeugsitz**
Longitudinal adjusting device for seats, particularly for vehicle seats
Dispositif de déplacement longitudinal pour sièges, en particulier pour sièges de véhicules

(30) Priorität: 13.03.1998 DE 19811094
(43) Veröffentlichungstag der Anmeldung: 15.09.1999
(73) Patentinhaber: KEIPER GmbH & Co. KG, 67657 Kaiserslautern (DE)
(72) Erfinder: Flick, Joachim, Dipl.-Ing., 42499 Hückeswagen (DE); Schüler, Rolf, Dipl.-Ing., 42579 Heiligenhaus (DE)
(74) Vertreter: Mentzel, Norbert, Dipl.-Phys.

(56) Entgegenhaltungen:
- DE-A- 19 647 448
- DE-A- 19 649 385
- DE-C- 4 242 895
- DE-C- 19 613 432

## Beschreibung

Die Erfindung betrifft eine Längsverstellvorrichtung für einen Sitz, insbesondere Kraftfahrzeugsitz, dessen mit einer neigungseinstellbaren und bedarfsweise auch vorschwenkbaren Rückenlehne verbundener Sitzteil an Laufschienen befestigt ist, wobei jede Laufschiene in einer am Fahrzeugboden festgelegten Führungsschiene längsverschiebbar ist und wenigstens eine Laufschiene mittels einer Sperreinrichtung in wählbaren Längslagen an der Führungsschiene feststellbar ist, ferner die Sperreinrichtung mit wenigstens einem im Sperrsinn federbelasteten, in die Rastöffnung einer Zahnreihe der Führungsschiene eingreifenden Sperrzahn ausgestattet ist, der über einen an der Laufschiene gelagerten und durch ein Auslöseglied betätigbaren Entriegelungshebel aus seiner Sperrlage aussteuerbar ist.

Eine Längsverstellvorrichtung dieser Art ist aus der deutschen Patentanmeldung 196 47 448 entnehmbar, deren Entriegelungshebel von einem Bügelhebel betätigbar ist, der an den auf jeder Sitzlängsseite angeordneten Laufschienen über ein die Schenkel des Bügelhebels miteinander verbindendes Querrohr gelagert ist. Die Verriegelung zwischen der Laufschiene und der Führungsschiene zur Feststellung der Sitzlängslage des Sitzes wird bei der vorbekannten Ausführungsform durch zumindest einen in der Laufschiene quer zur Verschieberichtung verlagerbaren Sperrzahn bewirkt, der federbelastet ist. Unabhängig davon, ob nur ein einziger Sperrzahn vorhanden ist oder mehrere federbelastete Sperrzähne nebeneinander eingesetzt sind, so nimmt in jedem Falle die vom Sitzbenutzer aufzubringende Lösekraft über den Lösehub während des gesamten Entriegelungsprozesses zu. Dabei spürt die Bedienungsperson einen stetigen Kraftanstieg und ist während der Betätigung nicht in der Lage zu beurteilen, wann die Aussteuerung der Sperrzähne soweit erfolgt ist, dass beim Verschieben der Laufschienen gegenüber den Führungsschienen die Spitze des Sperrzahnes bzw. der Sperrzähne nicht mehr über die Rastöffnungen der Zahnreihe rattern. Um diesem Nachteil zu begegnen, hat man gemäß der deutschen Patentanmeldung 196 49 385 vorgeschlagen, innerhalb der Entriegelungsmechanik wenigstens ein Federglied anzuordnen, dessen kinematische Anordnung eine während des Entriegelungsprozesses zunächst steigende, im weiteren Fortgang jedoch wieder abfallende Entriegelungskraft äußert. Dazu wird ein Federglied verwendet, das zwischen die Laufschiene und den Entriegelungshebel geschaltet ist, wobei das eine Federende über dem Schwenkpunkt des Entriegelungshebels an einem Widerlager der Laufschiene abgestützt ist, während das andere Federende an einer Stütznase angreift, die sich bei entriegelten Sperrzähnen gegenüber der Anlenkstelle an der Laufschiene in einer Totpunktlage befindet und aus dieser in eine den Sperrzahn in Riegellage belassende Übertotpunktlage bei Sperrstellung der Sperrzähne übergeht. Diese kinematische Anordnung erfordert hohe Fertigungsgenauigkeit in Bezug auf den Stütz- bzw. Schwenkpunkt des Entriegelungshebels, die Anlenkstelle des Federgliedes an der Laufschiene und die Lage der Stütznase am Entriegelungshebel.

Aufgabe der Erfindung ist es, eine Längsverstellvorrichtung der eingangs genannten Art dahingehend zu verbessern, dass das Maximum des von der Bedienungsperson aufzubringenden Kraftbedarfs gegenüber dem Ende des Betätigungshubes vorverlegt ist und während des Entriegelungsvorganges die Übersetzung des Hebelsystems eine degressive Einstellung erfährt.

Diese Aufgabe ist mit den im Kennzeichen des Patentanspruchs 1 genannten Merkmalen gelöst. Während nämlich der im Verhältnis zur Gelenkstelle und Druckstelle der Drucklasche wirksame Hebelarm des Betätigungshebels während der Entriegelungsbewegung ständig abnimmt, nimmt der dem Auslöseglied zugehörige Hebelarm des Betätigungsgliedes zu. Dies führt bei durch die Rückstellfedern gegebener Entriegelungskraft am Entriegelungshebel infolge des abnehmenden Hebelarmabstandes zum Drehpunkt des Betätigungshebels zu einer ansteigenden Betätigungskraft, die jedoch infolge des aus dem Auslöseglied erfolgenden Kraftangriffs wieder abnimmt, weil der durch das Auslöseglied beaufschlagte Hebelarm während der Lösebewegung in einer Weise bewegt wird, dass der Abstand zwischen dem Schwenkpunkt des Betätigungshebels und dem Kraftangriffspunkt des Auslösegliedes ständig zunimmt. Dies führt gegen Ende der Entriegelungsbewegung zu einer Abnahme der Stellkraft. Zu diesem Zweck mag der Betätigungshebel vorteilhaft als Winkelhebel ausgebildet sein, dessen einer Hebelarm die Gelenkstelle für die Drucklasche und dessen anderer Hebelarm ein Anschlussauge für ein manuell betätigbares, als Zugglied ausgebildetes, Auslöseglied aufweist.

Um einerseits den Betätigungshebel an der Laufschiene lagern zu können und andererseits beim Vorhandensein der Sperreinrichtung auf beiden Sitzlängsseiten deren Funktion von der einen zur anderen Seite hin übertragen zu können, ist der Betätigungshebel auf einer Sitzlängsseite drehfest mit einem Übertragungsrohr verbunden, das auf der anderen Sitzlängsseite einen weiteren Betätigungshebel drehfest trägt, wobei das Übertragungsrohr über einen Adapter an den Laufschienen gelagert ist.

Damit die Schwenkbewegung des Betätigungshebels keinesfalls die - eine Totpunktlage charakterisierende - Linie zwischen dem Drehpunkt des Betätigungshebels und der Druckstelle des Entriegelungshebels erreicht oder gar darüber hinaus geht, weist der Betätigungshebel einen die Entriegelungsbewegung begrenzenden, an der Drucklasche zur Anlage bringbaren Anschlag auf.

Es mag in vielen Fällen genügen, wenn als Auslöseglied ein Zugglied beispielsweise in Form eines Bowdenzuges eingesetzt wird, wobei die Betätigung über eine an der Rückenlehne angeordnete Handhabe erfolgen kann, wenn beispielsweise der Sitz zusammen mit der Vorschwenkbewegung der Rückenlehne ebenfalls vorgeschoben werden soll. Zur ausschließlichen Verschiebebewegung des Sitzes bei in ihrer Gebrauchslage verbleibender Rückenlehne mag es jedoch vorteilhaft sein, stattdessen den Betätigungshebel über eine Auslösestange bewegen zu können. Zu diesem Zweck weist nach einem weiteren Ausgestaltungsmerkmal der Erfindung der das Anschlussauge für ein Zugglied aufweisende Hebelarm des Betätigungshebels zwei nebeneinander angeordnete Teilarme auf, von denen der eine Teilarm dem Anschluss eines Zuggliedes und der andere Teilarm dem Anschluss einer Auslösestange dient.

Obschon die Drucklasche als Flachstück ausgebildet sein kann, so mag es in vielen Fällen vorteilhaft sein, wenn die Drucklasche im Bereich ihrer von einer Bohrung und einem Zapfen gebildeten Gelenkstelle gabelförmig den Betätigungshebel umgreifend ausgebildet ist und an der Druckstelle einen in Bezug auf die Stärke der Drucklasche gerundeten Durchbruch zur Aufnahme der Stützzunge des Entriegelungshebels aufweist. Dabei mag die Drucklasche zur Vermeidung von Betätigungsgeräuschen und aus Gründen einer wirtschaftlichen Herstellung vorteilhaft aus Kunststoff bestehen.

Der Erfindungsgegenstand ist in Ausführungsbeispielen auf der Zeichnung dargestellt und wird nachfolgend näher erläutert. Es zeigen:

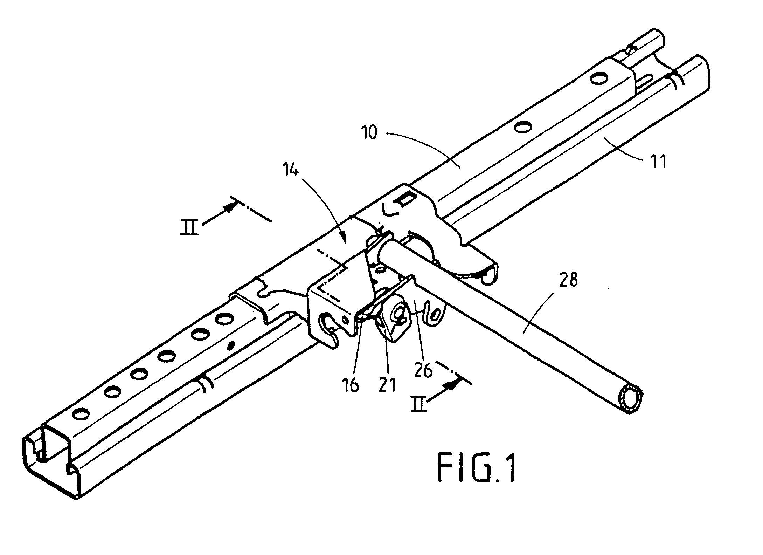

- Fig. 1: die auf einer Sitzlängsseite angeordnete, aus einer Laufschiene und einer Führungsschiene bestehende Schienenanordnung mit einer Sperreinrichtung, in perspektivischer Darstellung,
- Fig. 2: die in Verriegelungsstellung befindliche Sperreinrichtung im Querschnitt nach der Linie II - II von Fig. 1 in einem gegenüber Fig. 1 vergrößertem Maßstab,
- Fig. 3: die aus Fig. 2 ersichtliche Sperreinrichtung in einer Ansicht in Richtung des Pfeiles III von Fig. 2,
- Fig. 4: die aus Fig. 2 ersichtliche Sperreinrichtung in ihrer Entriegelungsstellung, bei der die Laufschiene gegenüber der Führungsschiene längsverschiebbar ist,
- Fig. 5: die aus Fig. 4 ersichtliche Sperreinrichtung in einer Ansicht in Richtung des Pfeiles V von Fig. 4,
- Fig. 6: ein weiteres Ausführungsbeispiel der Sperreinrichtung in einer perspektivischen, auf die Innenseite der Sitzschiene gesehenen Darstellung,
- Fig. 7: die aus Fig. 6 ersichtliche Sperreinrichtung in einer Ansicht auf die Innenseite der Schienenanordnung gesehen, bei der sich die Sperreinrichtung in einer Freigabelage für die Laufschiene befindet.

Die Unterseite eines nicht dargestellten Sitzrahmens ist auf beiden Sitzlängsseiten mit einer Laufschiene 10 verbunden, die in jeweils eine am Fahrzeugboden festgelegte Führungsschiene 11 eingreift und an dieser beispielsweise über Wälzkörper 12 längsverschiebbar abgestützt sein mag. Die Führungsschiene 11 weist an ihrem aufgewölbten Boden in Längsrichtung hintereinander abstandsweise angeordnete Durchbrüche 13 auf, welche eine Zahnreihe bilden. In diese Durchbrüche 13 greift wenigstens eine von mehreren Sperrklauen 15 ein, die Bestandteil einer an der Laufschiene 10 festgelegten Sperreinrichtung 14 sind, die durch einen ebenfalls an der Laufschiene 10 gelagerten quer zur Fahrzeuglängsrichtung wirkenden Entriegelungshebel 16 gegen die Wirkung eines Federgliedes 17 lösbar sind.

Dieser Entriegelungshebel 16 ist, wie aus den Zeichnungen ersichtlich, mit seinem mittleren Bereich in einer Lagerschale 18 eines mit der Laufschiene 10 fest verbundenen Gehäusekörpers der Sperreinrichtung 14 schwenkbeweglich abgestützt und untergreift mit seinem einen Ende einen Vorsprung 19 der Sperrklaue 15. Das andere Ende des zweiseitigen Entriegelungshebels 16 ist als Stützzunge 20 geformt, die in einen Durchbruch 22 einer Drucklasche 21 eingreift, und dort eine Druckstelle 23 bildet. Das andere Ende der Drucklasche 21 weist eine Bohrung 25 auf, die zusammen mit einem in die Bohrung 25 eingreifenden Zapfen 27 eines Betätigungshebels 26 eine Gelenkstelle 24 bildet.

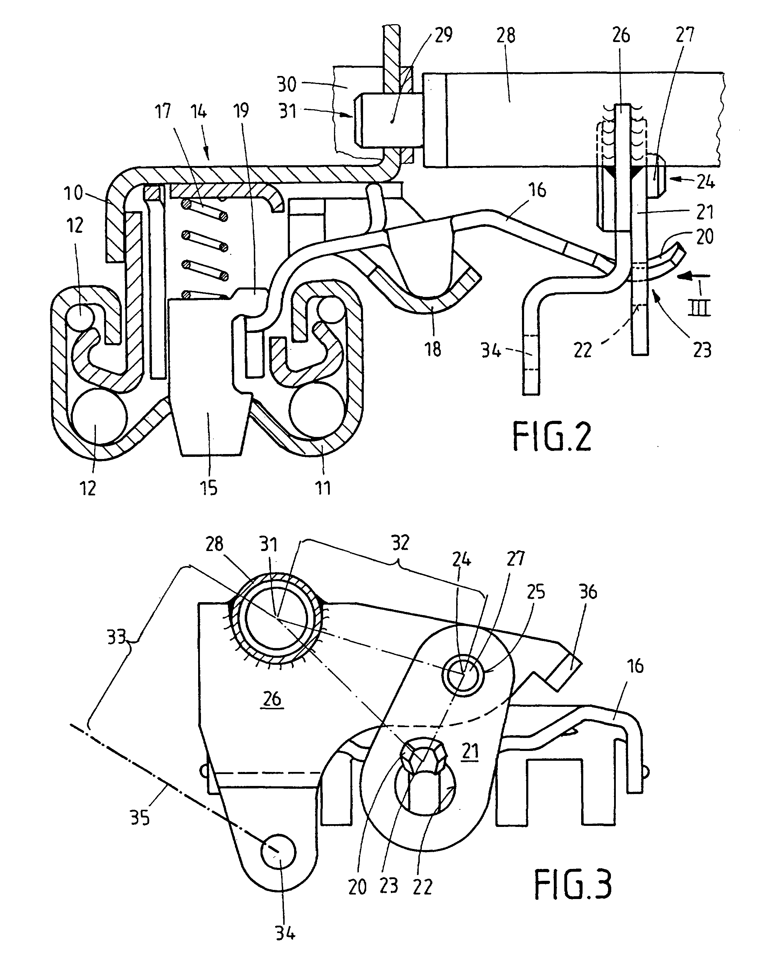

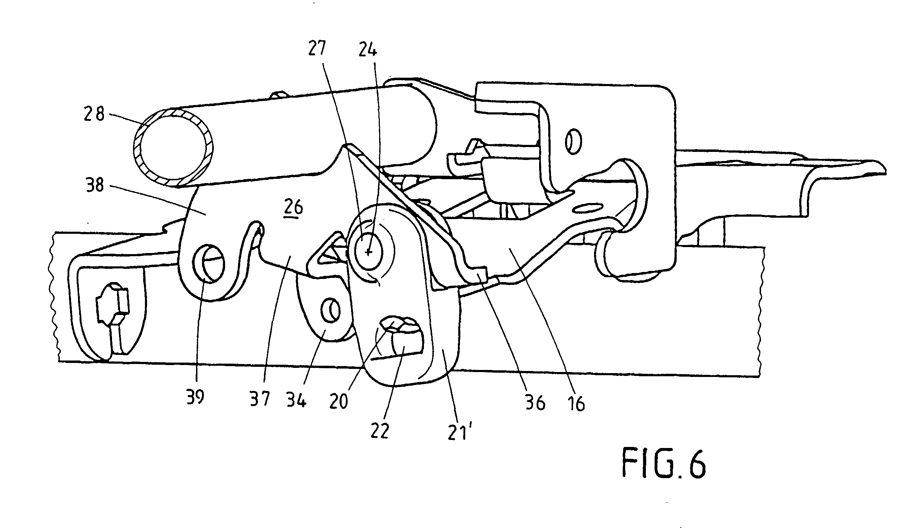

Der Betätigungshebel 26 ist mit einem Übertragungsrohr 28 beispielsweise durch Verschweißen fest verbunden, das mittels eingesteckter Bolzen 29 in einem Adapter 30 der Laufschiene 10 eine Lagerstelle 31 bildend auf beiden Sitzlängsseiten gelagert ist. Der eine Arm des Winkelhebels 26 wird durch den wirksamen Hebelarm 32 gebildet und erstreckt sich zwischen der Gelenkstelle 24 und der Lagerstelle 31. Der andere Arm des Gelenkhebels 26 wird durch den wirksamen Hebelarm 33 gebildet, der sich zwischen der Lagerstelle 31 und einem an dem Ende dieses Armes angeordneten Anschlussauge 34 erstreckt. Dieses Anschlussauge 34 nimmt bei den aus den Fig. 2 bis 5 ersichtlichen Ausführungsbeispiel ein in strichpunktierten Linien angedeutetes Zugglied 35 auf, bei dem es sich beispielsweise um einen Bowdenzug handeln kann. Am Ende des den wirksamen Hebelarm 32 aufweisenden Armes des Betätigungshebels 26 ist ein winkelförmig abgebogener Anschlag 36 angeordnet, durch welchen der aus Fig. 5 ersichtliche Lösehub des Entriegelungshebels 16 begrenzt wird, indem dieser Anschlag 36 an einer Seite der Drucklasche 21 zur Anlage kommt.

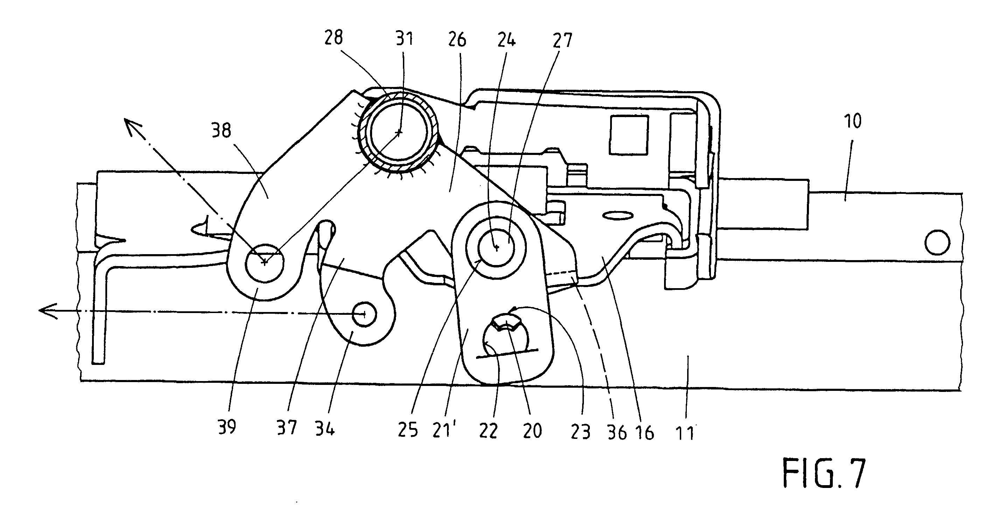

Das aus den Fig. 6 und 7 ersichtliche Ausführungsbeispiel stimmt prinzipiell mit der aus den Fig. 2 bis 5 ersichtlichen und vorbeschriebenen Ausführungsform überein. Im Unterschied dazu ist jedoch der den wirksamen Hebelarm 33 bzw. 33' aufweisende Arm des winkelförmig gestalteten Betätigungshebels 26 aus zwei nebeneinander angeordneten Teilarmen 37 und 38 gebildet, wovon der eine Teilarm 37 ein nach innen abgekröpftes Armende aufweist, welches das Anschlussauge 34 für ein Zugglied 35 bildet. Der andere Teilarm 38 weist an seinem Ende ein Loch 39 auf, welches der Aufnahme eines nicht dargestellten Stangenendes dient, mit welchem ebenso wie mit dem Zugglied 35 die Auslösung der Sperrklaue 15 aus ihrer Verriegelungslage bewerkstelligt werden kann. Die Richtung der jeweils eingeleiteten Zugkraft in die Teilarme 37 und 38 ist in strichpunktierten Linien in Fig. 7 dargestellt.

An ihrem den wirksamen Hebelarm 32 aufweisenden Ende befindet sich eine nicht näher bezeichnete Bohrung, die ebenso wie der gabelförmige Endbereich der Drucklasche 21' von einem Zapfen 27 durchdrungen ist, wobei die Gabelschenkel der Drucklasche 21' jeweils eine Bohrung 25 zur Aufnahme des Zapfens 27 aufweisen, der mit seinem Mittelpunkt die zuvor erwähnte Gelenkstelle 24 bildet. Am dieser Gelenkstelle 24 gegenüberliegenden Ende ist die Drucklasche 21' mit einem Durchbruch 22 versehen, in dessen oberem Bereich die Stützzunge 20 des Entriegelungshebels 16 die zuvor erwähnte Druckstelle 23 bildend anliegt. Wie insbesondere der Fig. 6 entnommen werden kann, ist die Drucklasche 21' zur Gabelbildung dickwandig ausgeführt und kann vorteilhaft aus Kunststoff gebildet sein.

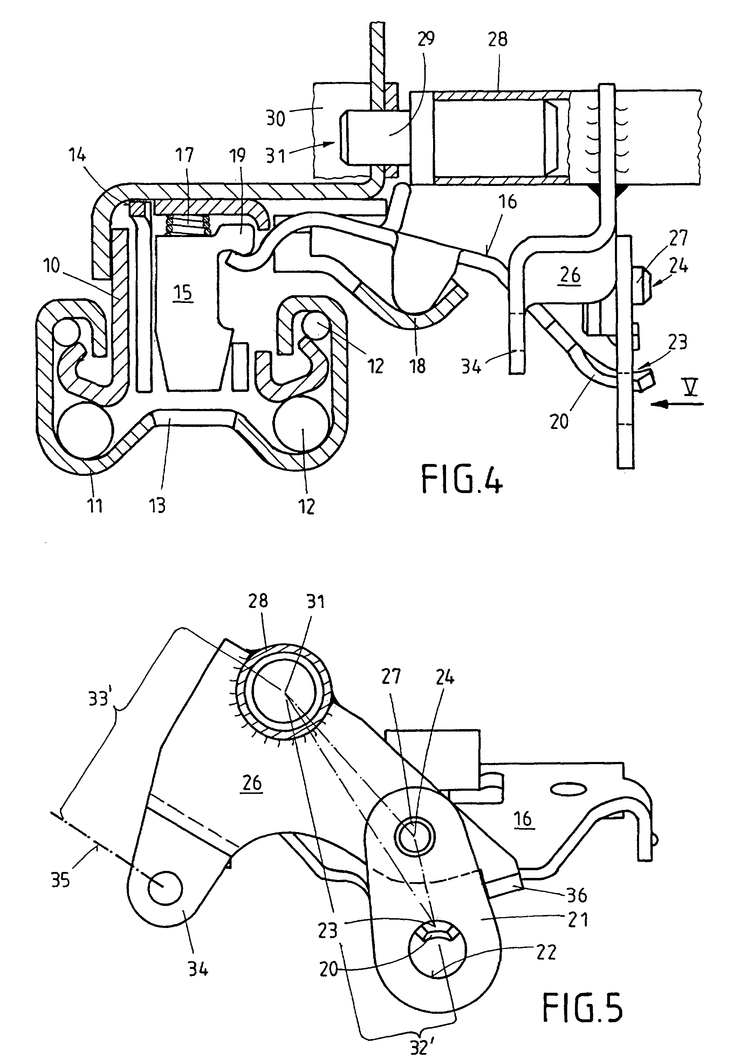

Die Funktionsweise der erfindungsgemäßen Vorrichtung lässt sich am besten anhand der Fig. 2 bis 5 beschreiben. Ausgehend von der in den Fig. 2 und 3 dargestellten Sperrlage zwischen Laufschiene 10 und Führungsschiene 11 nehmen der Entriegelungshebel 16, die Drucklasche 21 und der Betätigungshebel 26 die aus den Fig. 2 und 3 ersichtliche Stellung ein. In dieser Lage erreicht der wirksame Hebelarm 32 des Betätigungshebels 26 seinen Maximalwert, während der wirksame Hebelarm 33 des Betätigungshebels 26 seinen Minimalwert aufweist. Wird nun über das Zugglied 35 eine Kraft in das Anschlussauge 34 im Sinne einer Verschwenkung des Betätigungshebels 26 im Uhrzeigerdrehsinn eingeleitet, so erfolgt über die Gelenkstelle 24 durch die Drucklasche 21 eine Druckbeaufschlagung des Entriegelungshebels 16 in der Druckstelle 23. Dadurch wird die Stützzunge 20 des Entriegelungshebels 16 in die aus Fig. 4 ersichtliche Lage niedergedrückt, wodurch sein gegenüberliegendes Ende angehoben wird und die Sperrklaue 15 gegen die Wirkung des Federgliedes 17 nach oben aus dem Durchbruch 13 in der Führungsschiene 11 auszieht. Dabei wird das Ende der Schwenkbewegung des Betätigungshebels 26 durch seinen Anschlag 36 begrenzt, der am Ende der Entriegelungsbewegung auf der Außenseite der Drucklasche 21 zur Anlage kommt. In dieser aus Fig. 5 ersichtlichen Schwenklage ist der von der Lagerstelle zur Gelenkstelle 24 weisende wirksame Hebelarm 32' auf einen Minimalwert gesunken, während der wirksame Hebelarm 33' zwischen der Lagerstelle 31 und dem Anlenkpunkt des Zuggliedes 35 am Anschlussauge 34 des Betätigungshebels 26 einen Maximalwert aufweist.

Da der wirksame Hebelarm 32 der Betätigungskräfte für die Entriegelung im Verlauf der Entriegelungsbewegung abnimmt, nimmt der für die durch das Zugglied 35 ausgelöste Lösekraft wirksame Hebelarm 33 zu. Das führt dazu, dass der im Verlauf der Entriegelungsbewegung für die Bedienungsperson merkbare ansteigende Kraftbedarf am Ende der Entriegelungsbewegung abnimmt. Die Positionierung der Druckstelle 23, der Gelenkstelle 24 und der Lagerstelle 31 zueinander lässt sich so wählen, dass der gewünschte Entriegelungskraftverlauf entsprechend den Anforderungen einstellbar ist. Eine Blockierung der kniehebelartigen Kinematik wird dadurch verhindert, dass die Winkelbewegung von Drucklasche 21 und Betätigungshebel 26 durch den Anschlag 36 derart begrenzt wird, dass die Schwenkbewegung der Bauteile zueinander endet, bevor eine Totpunktlage oder gar Übertotpunktlage der Gelenkstelle 24 erreicht wird.

Wie bereits erwähnt, geben die dargestellten und vorbeschriebenen Ausführungen den Erfindungsgegenstand nur beispielsweise wieder, der keinesfalls allein darauf beschränkt ist. Es sind vielmehr noch manche Änderungen und andere Ausgestaltungen der Erfindung denkbar. Außerdem sind alle in der Beschreibung genannten und aus den Zeichnungen ersichtlichen Merkmale erfindungswesentlich, auch wenn sie nicht ausdrücklich beansprucht sind.

### Bezugszeichenliste:

- 10: Laufschiene
- 11: Führungsschiene
- 12: Wälzkörper
- 13: Durchbruch
- 14: Sperreinrichtung
- 15: Sperrklaue
- 16: Entriegelungshebel
- 17: Federglied
- 18: Lagerschale
- 19: Vorsprung, an 15
- 20: Stützzunge, an 16
- 21: Drucklasche
- 21': Drucklasche
- 22: Durchbruch, in 21
- 23: Druckstelle
- 24: Gelenkstelle
- 25: Bohrung, in 21
- 26: Betätigungshebel/Winkelhebel
- 27: Zapfen
- 28: Übertragungsrohr
- 29: Bolzen
- 30: Adapter
- 31: Lagerstelle
- 32: Hebelarm
- 32': Hebelarm
- 33: Hebelarm
- 33': Hebelarm
- 34: Anschlussauge
- 35: Zugglied
- 36: Anschlag
- 37: Teilarm
- 38: Teilarm
- 39: Loch, in 38

## Patentansprüche

1. Sitz, insbesondere Kraftfahrzeugsitz, mit Längsverstellvorrichtung dessen mit einer neigungseinstellbaren und bedarfsweise auch vorschwenkbaren Rückenlehne verbundener Sitzteil an Laufschienen befestigt ist, wobei jede Laufschiene (10) in einer am Fahrzeugboden festgelegten Führungsschiene (11) längsverschiebbar ist und wenigstens eine Laufschiene (10) mittels einer Sperreinrichtung (14) in wählbaren Längslagen an der Führungsschiene (11) feststellbar ist, ferner die Sperreinrichtung (14) mit wenigstens einem im Sperrsinn federbelasteten, in die Rastöffnung einer Zahnreihe der Führungsschiene (11) eingreifenden Sperrzahn ausgestattet ist, der über einen an der Laufschiene (10) gelagerten und durch ein Auslöseglied betätigbaren Entriegelungshebel (16) aus seiner Sperrlage aussteuerbar ist,
**dadurch gekennzeichnet , dass** der Entriegelungshebel (16) mit einer Stützzunge (20) eine Druckstelle (23) bildend an einer Drucklasche (21) angreift, die über eine Gelenkstelle (24) mit einem an der Laufschiene (10) in einer Lagerstelle (31) schwenkbar angeordneten Betätigungshebel (26) derart verbunden ist, dass der im Verhältnis zur Gelenkstelle (24) und zur Druckstelle (23) der Drucklasche (21) wirksame Hebelarm (32, 32') des Betätigungshebels (26) während der Entriegelungsbewegung ständig abnimmt, und die Schnittpunkte der Verbindungslinien zwischen Druckstelle (23), Gelenkstelle (24) und Lagerstelle (31) die Ecken eines Dreiecks bilden, dessen im Bereich der Gelenkstelle (24) eingeschlossener Winkel bei der Entriegelungsbewegung gegen 180° geht.

2. Sitz nach Anspruch 1, **dadurch gekennzeichnet, dass** der Betätigungshebel (26) als Winkelhebel ausgebildet ist, dessen einer Hebelarm (32) die Gelenkstelle (24) für die Drucklasche (21) und dessen anderer Hebelarm (33) ein Anschlussauge (34) für ein manuell betätigbares Zugglied (35) aufweist.

3. Sitz nach Anspruch 1 und/oder 2, **dadurch gekennzeichnet, dass** der Betätigungshebel (26) auf einer Sitzlängsseite drehfest mit einem Übertragungsrohr (28) verbunden ist, das auf der anderen Sitzlängsseite einen weiteren Betätigungshebel (26) drehfest trägt, wobei das Übertragungsrohr (28) über einen Adapter (30) an den Laufschienen (10) gelagert ist.

4. Sitz nach einem der vorhergehenden Ansprüche, **dadurch gekennzeichnet, dass** der Betätigungshebel (26) einen die Entriegelungsbewegung begrenzenden, an der Drucklasche (21) zur Anlage bringbaren Anschlag (36) aufweist, durch den die Entriegelungsbewegung vor Erreichen eines Winkels von 180° im Bereich der Gelenkstelle (24) endet.

5. Sitz nach Anspruch 2, **dadurch gekennzeichnet, dass** der das Anschlussauge (34) für ein Zugglied (35) aufweisende Hebelarm (33) des Betätigungshebels (26) zwei nebeneinander angeordnete Teilarme (37, 38) aufweist, von denen der eine Teilarm (37) dem Anschluss eines Zuggliedes (35) und der andere Teilarm (38) dem Anschluss einer Auslösestange dient.

6. Sitz nach einem der vorhergehenden Ansprüche, **dadurch gekennzeichnet, dass** die Drucklasche (21') im Bereich ihrer von einer Bohrung (25) und einem Zapfen (27) gebildeten Gelenkstelle (24) gabelförmig, den Betätigungshebel (26) umgreifend, ausgebildet ist und an der Druckstelle (23) einen in Bezug auf die Stärke der Drucklasche (21') gerundeten Durchbruch (22) zur Aufnahme der Stützzunge (20) des Entriegelungshebels (16) aufweist.

7. Sitz nach Anspruch 6, **dadurch gekennzeichnet, dass** als Werkstoff für die Drucklasche (21') Kunststoff Verwendung findet.

## Claims

1. Seat, in particular motor vehicle seat with a longitudinal adjusting device, the seat part of said seat, connected to a seatback, which can be adjusted in inclination and also swivelled forward as required, being mounted on running rails, wherein each running rail (10) is longitudinally displaceable in a guide rail (11) fixed to the vehicle floor and at least one running rail (10) can be immobilised on the guide rail (11) in optional longitudinal positions by means of a locking device (14) and further the locking device (14) is fitted with at least one locking tooth, which is spring-loaded in the locking direction, engages in the catching orifice of a row of teeth of the guide rail (11) and can be steered out of its locking position via a release lever (16) held on the running rail (10) and actuatable via a triggering member, **characterised in that**
the release lever (16), forming a pressure spot (23) with a support tongue (20), acts on a pressure plate (21), which is connected via a hinged point (24) to an actuating lever (26), arranged as swivellable in a bearing point (31) on the running rail (10), in such a way that the lever arm (32, 32') of the actuating lever (26) acting in proportion to the hinged point (24) and to the pressure spot (23) of the pressure plate (21) constantly decreases during the release movement and the intersection points of the connecting lines between pressure spot (23), hinged point (24) and bearing point (31) form the corners of a triangle, the angle of which enclosed in the area of the hinged point (24) approaches 180° during the release movement.

2. Seat according to claim 1, **characterised in that** the actuating lever (26) is constructed as an angled lever, one lever arm (32) of which has the hinged point (24) for the pressure plate (21) and the other lever arm (33) of which has a connecting boss (34) for a manually actuatable brace (35).

3. Seat according to claim 1 and/or 2, **characterised in that** the actuating lever (26) is connected as fixed against rotation on a longitudinal side of the seat to a transmission tube (28) which carries as fixed against rotation on the other longitudinal side of the seat a further actuating lever (26), the transmission tube (28) being held on the running rails (10) via an adaptor (30).

4. Seat according to one of the preceding claims, **characterised in that** the actuating lever (26) has a stop (36), limiting the release movement and able to be brought into contact with the pressure plate (21), by means of which the release movement ends before reaching an angle of 180° in the area of the hinged point (24).

5. Seat according to claim 2, **characterised in that** the lever arm (33) of the actuating lever (26) having the connecting boss (34) for a brace (35) has two partial arms (37, 38) arranged next to one another, of which one partial arm (37) serves as connection of a brace (35) and the other partial arm (38) as connection of a triggering rod.

6. Seat according to one of the preceding claims, **characterised in that** in the area of its hinged point (24), formed from a bore (25) and a peg (27), the pressure plate (21') is constructed as fork-shaped and surrounding the actuating lever (26) and has at the pressure spot (23) an opening (22) rounded in relation to the thickness of the pressure plate (21') for receiving the support tongue (20) of the release lever (16).

7. Seat according to claim 6, **characterised in that** synthetic material is used as material for the pressure plate (21').

## Revendications

1. Siège, en particulier siège pour véhicules automobiles comportant un dispositif de réglage longitudinal, dont la partie d'assise, reliée à un dossier susceptible d'être réglé en inclinaison et, en cas de besoin, également d'être pivoté vers l'avant, est fixée sur des glissières de défilement, chaque glissière de défilement (10) étant déplaçable longitudinalement dans une glissière de guidage (11) fixée au fond ou plancher du véhicule, et au moins une glissière de défilement (10) étant susceptible d'être fixée au moyen d'un dispositif de blocage (14) en des positions longitudinales sélectionnables sur la glissière de guidage (11), en outre le dispositif de blocage (14) étant muni d'au moins une dent de blocage, chargée élastiquement dans le sens du blocage, s'engageant dans l'ouverture d'encliquetage d'une rangée de dents appartenant à la glissière de guidage (11), la dent de blocage pouvant être sortie de sa position de blocage par l'intermédiaire d'un levier de déverrouillage (16), monté sur la glissière de défilement (10) et actionnable au moyen d'un organe de déverrouillage,
**caractérisé en ce que**
le levier de déverrouillage (16) agit, par une languette d'appui (20) formant un point de pressage (23), sur une patte de pressage (21) qui est reliée, par l'intermédiaire d'un point d'articulation (24), à un levier d'actionnement (26) disposé de façon à pouvoir pivoter sur la glissière de défilement (10) en un point de tourillonnement (31), la liaison étant telle que le bras de levier (32, 32'), agissant par rapport au point d'articulation (24) et par rapport au point de pressage (23) de la patte de pressage (21), du levier d'actionnement (26), pendant le déplacement de déverrouillage, aille en diminuant de façon constante, et que les points d'intersection des lignes de liaison en le point de pressage (23), le point d'articulation (24) et le point de tourillonnement (31) forment les angles d'un triangle dont l'angle, inclus dans la zone du point d'articulation (24), tend vers 180° lors du déplacement de déverrouillage.

2. Siège selon la revendication 1, **caractérisé en ce que** le levier d'actionnement (26) est réalisé sous la forme de levier coudé, dont un bras de levier (32) présente le point d'articulation (24) pour la patte de pressage (21) et dont l'autre bras de levier (33) présente un oeillet de raccordement (34) pour un organe de traction (35) susceptible d'être actionné manuellement.

3. Siège selon la revendication 1 et/ou 2, **caractérisé en ce que** le levier d'actionnement (26) est relié, sur le côté longitudinal de siège, de façon assujettie en rotation à un tube de transmission (28), qui porte, de façon assujettie en rotation, sur l'autre côté longitudinal de siège, un autre levier d'actionnement (26), le tube de transmission (28) étant monté par un adaptateur (30) sur les glissières de défilement (10).

4. Siège selon l'une des revendications précédentes, **caractérisé en ce que** l'organe d'actionnement (26) présente une butée (36) délimitant le mouvement de déverrouillage, butée susceptible d'être mise en appui sur la patte de pressage (21), butée au moyen de laquelle le déplacement de déverrouillage s'achève avant l'atteinte d'un angle de 180° dans la zone du point d'articulation (24).

5. Siège selon la revendication 2, **caractérisé en ce que** le bras de levier (33), présentant l'oeillet de raccordement (34) pour un organe de traction (35), du levier d'actionnement (26) présente deux bras partiels (37,38) disposés l'un à côté de l'autre, dont un premier bras partiel (37) sert au raccordement d'un organe de traction (35) et l'autre bras de traction (38) sert au raccordement d'une barre de déclenchement.

6. Siège selon l'une des revendications précédentes, **caractérisé en ce que**, dans la zone de son point d'articulation (24), formé par un perçage (25) et un tourillon (27), la patte de pressage (21') est réalisée en forme de fourche, en entourant le levier d'actionnement (26), et présente, sur le point de pressage (23), une traversée (22) arrondie par rapport à l'épaisseur de la patte de pressage (21'), afin de supporter la languette d'appui (20) du levier de déverrouillage (16).

7. Siège selon la revendication 6, **caractérisé en ce qu'**on utilise de la matière synthétique comme matériau pour la patte de pressage (21').
